# EUROPEAN PATENT APPLICATION

(11) **EP 4 487 981 A1**
(43) Date of publication of application: **08.01.2025**
(21) Application number: 23184014.1
(22) Date of filing: 06.07.2023
(51) Int. Cl.: B22F 10/28, B22F 10/85, B22F 12/60, B22F 12/90, B22F 10/37

(54) **METHOD FOR MONITORING AND CLASSIFYING ADDITIVE MANUFACTURED PARTS BASED ON THE QUALITY THEREOF**

(71) Applicant: Amiquam SA, 1196 Gland (CH)
(72) Inventor: Revaz, Bernard, 1205 Genève (CH); Wicht, Jonatan, 1260 Nyon (CH); Berthoud, Alain, 1219 Châtelaine (CH); Lany, Marc, 1180 Rolle (CH); Santi, Gilles, 1007 Lausanne (CH); Spurek, Marvin A., 8002 Zurich (CH); Spierings, Adriaan B., 9300 Wittenbach (CH)
(74) Representative: P&TS SA (AG, Ltd.)

(57) **Abstract**

The present invention relates to a method for manufacturing, monitoring and classifying an AM metal part. The AM part is manufactured by a powder-bed additive manufacturing machine comprising a build plate (BP), a recoater (RC) and at least one electromagnetic sensor (ECS) mounted on the recoater. The method comprises the steps of: i) spreading a powder layer (PL) over the build plate (BP) with the recoater and manufacturing a layer of the AM part by selectively illuminating the powder layer to obtain a consolidated layer (CL); ii) driving the electromagnetic sensor (ECS) using at least one a predefined interrogating frequency, sensing one or more sub-parts of said consolidated layer (CL) and storing a measurement of both the in-phase and the out-of-phase electric signals for each of said one or more sub-parts; iii) lowering the build plate and repeating steps i) and ii) for building and sensing one or more additional consolidated layers (CL); iv) transforming measurements acquired under step ii) into lift off values and frequency values respectively using lift off calibration values and frequency calibration values acquired during a calibration procedure; v) calculating a first statistical value based on said lift off values and a second statistical value based on said frequency values, and vi) classifying the quality of the built AM part as acceptable or not acceptable by comparing said first statistical value with a first threshold and said second statistical value with a second threshold.

## Description

### Field of the invention

The present invention relates to a method for manufacturing and monitoring additive manufactured parts (AM parts) during manufacturing thereof using a power-bed additive manufacturing machine. The method is adapted for classifying these AM parts as acceptable or not acceptable based on their quality according to the quality standards in their field of applications.

### Description of related art

The metal additive manufacturing industry has greatly improved in the recent years so that parts are now manufactured not only for prototyping but also for products in applications in demanding industries such as the aerospace, MedTech, automotive, and manufacturing industries. Among the main success stories of the metal additive manufacturing technology are the Titanium alloy lattice prosthesis and the fuel nozzles integrated in the aerospace engines.

In one of the metal AM technologies known as laser-based powder fusion of metals (PBF-LB/M), the parts are produced by selectively fusing, using one or more power lasers, a layer of powder, previously spread over a build plate using a recoater. Whereas other techniques may provide higher productivity (for instance laser melting deposition, directed energy deposition or binder jetting), PBF-LB/M is considered the best compromise between the dimensional accuracy required by high end parts and the need for productivity. This technique therefore accounts for a large part of the metal AM market.

A bottleneck preventing a wider use of the PBF-LB/M technique in the industry is the cost and delays caused by unpredictable defects that are induced in the AM parts during manufacturing thereof. These defects, which cannot be detected for most AM parts during their additive manufacturing, are assessed long after the fabrication using costly destructive tests (metallography) and nondestructive tests (CT scans, UT, electromagnetic, etc..). In addition, as it is known that defects are generated during the process, lengthy qualification efforts are required to define the optimized process parameters that reduce the probability of defect appearance. All these result in high costs and a high number of scrap parts that the industry is willing to reduce.

This situation has driven the industry to invest in the development of monitoring solutions aimed at detecting defects (cracks, pores, inclusions, warping, dimensional deviations, etc..) or other process deviations during the process. These monitoring solutions include on-axis melt pool monitoring (imaging, photodiodes, pyrometry), off-axis optical and infrared imaging, and acoustic emission to name the most important. However, none of them is yet able to reliably detect defects and provide the part manufacturer unambiguous alarms about the presence of a defect that would not pass the post process compliant inspection.

It is known that PBF-LB/M can produce high quality parts having low porosity, but it is not clear how to control all the parameters necessary to routinely manufacture them over time in a production context. The presence of defects (i.e. anomaly measured with a compliant Non Destructive Testing technique that exceeds a threshold defined in a procedure) has two main root causes. The first cause of defects is due to stochastic events such as the redeposition of particles that are ejected from the melt pool on the build, which is known as "spattering". The probability of these events can be reduced by carefully optimizing the process parameters and reducing the energy input. The second cause of defects is due to variations in the process (laser properties, presence of fumes, defects in the powder bed, etc..) that go unnoticed by the existing state of the art monitoring systems.

A feature of the PBF-LB/M process is that some of these variations are self-compensated by the process itself so that they do not lead to the overall failure of the process. One of these variations is the thickness of the powder layer over the part that will be subsequently fused, and the thickness of the consolidated metal layer. It is well known that the LPBF process can adjust for such variations without leading to the failure of the process. For example, if one powder layer is less dense than the average ones because of some process deviation, the consolidated layer will be thinner and therefore the subsequent powder layer will be thicker, thus providing more material for the fusion, resulting in a thicker consolidated layer. Fluctuations of the deposited layers up to 20% of the expected nominal layer thickness can occur without catastrophic failure of the process. For these reasons, industry has not paid much attention to these fluctuations.

It is however demonstrated that these fluctuations are correlated with degraded quality and more defects in the produced AM parts. Moreover, these fluctuations tend to vary the effective deposited powder layer thickness and affect the sample density, both for the lower energy side resulting in lack of fusion defects, and for the higher energy side resulting in keyhole defects.

### Brief summary of the invention

An aim of the present invention is to provide a method for monitoring AM parts during manufacturing thereof and for classifying these AM parts based on their quality according to the quality standards in their field of applications.

Another aim of the present invention is to provide a non-destructive method for determining in a rapid manner whether AM parts comply with given quality standards.

These aims are achieved by means of a method for manufacturing, monitoring and classifying an AM metal part. The AM part is manufactured by a powder-bed additive manufacturing machine comprising a build plate, a recoater and at least one electromagnetic sensor mounted on the recoater. The method comprises the steps of: i) spreading a powder layer over the build plate with the recoater and manufacturing a layer of the AM part by selectively illuminating the powder layer to obtain a consolidated layer, ii) driving the electromagnetic sensor using at least one a predefined interrogating frequency, sensing one or more sub-parts of said consolidated layer and storing a measurement of both the in-phase and the out-of-phase electric signals for each of said one or more sub-parts; iii) lowering the build plate by one nominal layer thickness and repeating steps i) and ii) for building and sensing one or more additional consolidated layers; iv) transforming measurements acquired under step ii) into lift off values and frequency values respectively using lift off calibration values and frequency calibration values acquired during a calibration procedure, v) calculating a first statistical value based on said lift off values and a second statistical value based on said frequency values, and vi) classifying the quality of the built AM part as acceptable or not acceptable by comparing said first statistical value with a first threshold and said second statistical value with a second threshold.

In an embodiment, the measurements acquired under step ii) are transformed under step iv) into said lift off values and frequency values using interpolation coefficients of said at least one electromagnetic sensor (ECS) obtained by the calibration procedure.

In an embodiment, the interpolation coefficients are obtained by executing a 2D interpolation algorithm on both the in-phase and of out-of-phase electric signals measured on a calibration sample for two or more selected frequencies, preferably at least five selected frequencies, for each of at least two lift off positions, preferably at least five lift off positions. The calibration sample is of a predefined quality, for example of a known porosity, and is made of the same material as the material of the AM part to be manufactured.

In an embodiment, the predefined interrogating frequency is between 1kHz and 10MHz and said two or more selected frequencies are set within the range from 80% to 120%, preferably from 90% to 110% of the predefined interrogating frequency.

In an embodiment, a distance measurement sensor is mounted on the recoater to measure a powder distance between the top surface of the powder layer prior to consolidation and the known position of the distance measurement sensor. The powder layer thickness is calculated based on the difference between said powder distance and the lift off value obtained by the electromagnetic sensor. Alternatively, the powder layer thickness can be measured using the difference between two distances measured with the distance measurement sensor, one at a location where powder has been illuminated and one at a location where no illumination took place.

In an embodiment, the method further comprises the step of comparing the ratio between the consolidated layer thickness and the powder layer thickness with a threshold range set preferably between 1.3 and 5.0, and the step of classifying the quality of the built AM metal part as not acceptable if said ratio exceeds said threshold range.

In an embodiment, the quality of the built AM metal part is classified as not acceptable, and the manufacturing process is stopped if the powder layer thickness is below a lower powder thickness threshold or above an upper power thickness threshold.

In an embodiment, the first statistical value is the standard deviation of the lift off values acquired under step iv) for at least one sub-part of each of a plurality of consolidated layers, preferably at least five consolidated layers. The first threshold is a standard deviation value of the lift off above which the quality of the AM metal part is classified as not acceptable.

In an embodiment, the first threshold based on the standard deviation value of the lift off is set within a range extending from 2um to 10um.

In an embodiment, the first statistical lift off value is the standard deviation of the lift off values acquired under step iv) for at least one sub-part of each of a plurality of consolidated layers, preferably at least three consolidated layers. The first threshold is a percentage of the value of the nominal layer thickness, controlled by the downward steps of the build plate during manufacturing, above which the quality of AM metal part is classified as not acceptable. This percentage is set for example within a range extending from 10% to 20% of the nominal layer thickness.

In an embodiment, the second statistical value is the standard deviation of the frequency values acquired under step iv) for at least one sub-part of each of a plurality of consolidated layers, preferably at least five layers. The second threshold is a standard deviation value above which the quality of the AM metal part is classified as not acceptable.

In an embodiment, the second statistical value is the mean value of frequency values acquired under step iv) for at least one sub-part of each of a plurality of consolidated layers. The frequency threshold to classify the AM part as acceptable is a percentage range of the calibration frequency value measured on a calibration sample during the calibration procedure, for example between 90% and 99.9% of said calibration frequency value.

In an embodiment, the second statistical value is correlated to a given density, the AM part above said given density being classified as an acceptable part.

In an embodiment, the lift off values acquired under step iv) are fed to a closed feedback loop system for controlling the powder layer thickness according to the lift off values by adjusting the build plate steps and/or for controlling the laser power.

### Brief Description of the Drawings

The invention will be better understood with the aid of the description of several embodiments given by way of examples and illustrated by the figures, in which:
- Figure 1 shows a perspective view of a recoater of a PBF-LB/M machine during manufacturing of an AM part, wherein the recoater comprises an electromagnetic sensor and a distance measurement sensor;
- Figure 2a to 2f show schematic views of a sequence of movements of the recoater and the build plate of Figure 1 before and after consolidation of a powder layer,
- Figure 3 shows a graph of multiple EC measurements performed by the electromagnetic sensor on a calibration sample at controlled lift off and frequency coordinates during a calibration procedure;
- Figure 4 shows a fine 2D mesh generated based on the EC measurements for calculating interpolation coefficients of the electromagnetic sensor for determining lift off values and frequency values of an AM part, and
- Figure 5 shows a graph showing the quality of an AM part as a function of the standard deviation of the lift off values and of the mean frequencies as a percentage of the frequencies acquired during the calibration procedure for the same signal signature acquired on both the calibration sample and the AM part.

### Detailed Description of possible embodiments of the Invention

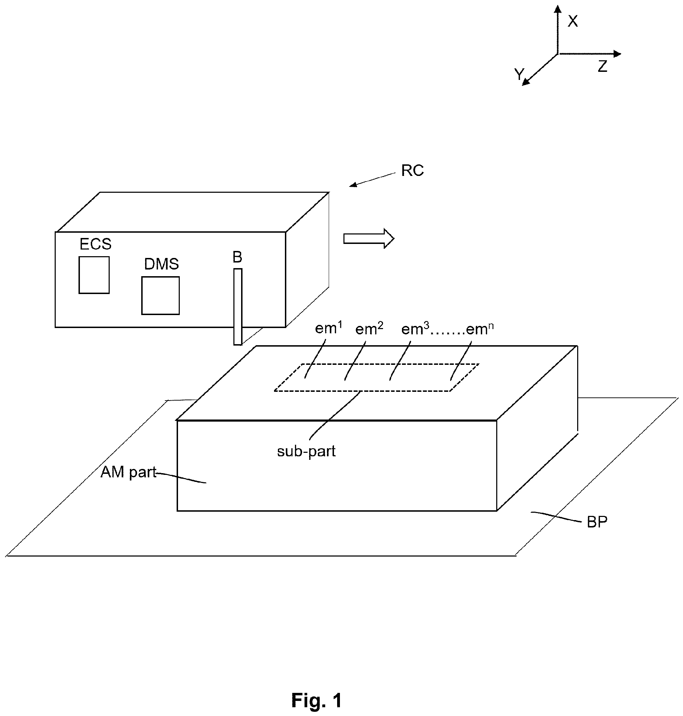

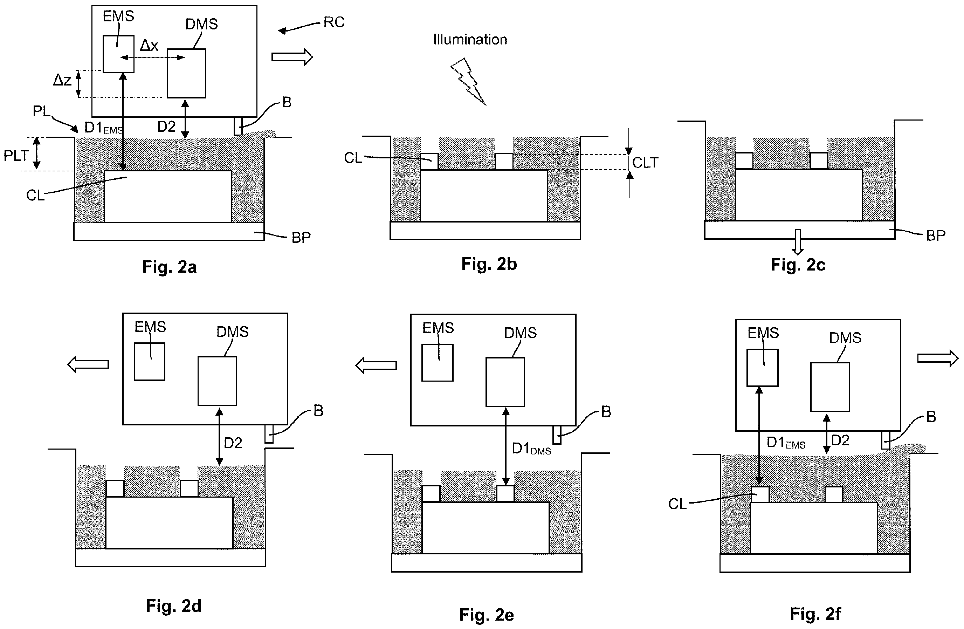

With reference to Figures 1 and 2a to 2f, the method for manufacturing, monitoring and classifying an AM metal part uses a recoater RC of a powder-bed fusion additive manufacturing machine. The recoater RC as schematically illustrated in Figure 1, comprises a blade B for spreading powder layers PL over the build plate BP or a consolidated layer as shown in Figure 2a. The recoater comprises at least one electromagnetic sensor ECS, for example an Eddy-current sensor, and optionally a distance measurement sensor DMS, which can be selected preferably among an electromagnetic sensor such as Eddy-current sensor, an inductive sensor, an optical sensor such as triangulation sensor, time of flight sensor (TOF), confocal sensor, structural light illumination sensor, interferometry-based sensor, and reflectivity-based sensor.

The electromagnetic sensor ECS is configured to measure both i) lift off values, i.e. the distance between the top surface of a consolidated layer CL and the electromagnetic sensor which correspond to the distance D1 as shown in Figures 2a et 2f, and ii) the frequency response values of the consolidated layer CL that is sensed by effect of the penetrating eddy currents. Thresholds on both lift off values or statistical values of these and frequency response values (or statistical values of these) are then applied to classify an AM metal part as acceptable or not according to the quality standards in the AM part field of application.

As explained hereafter, the use of both lift off values and frequency response values are essential to the disclosed method for determining whether the quality of an AM part can be qualified as acceptable according to the quality standards in their field of applications. Indeed, classifying the quality part in response exclusively of either the measured lift off values or the frequency response values would result to poor classification.

For example, AM parts manufactured with too low energy input likely have lack of fusion defects but may nevertheless yield relatively good stability in terms of lift off values but a bad frequency response. Conversely, AM parts manufactured with too high energy input generally have keyhole pores which may result in a relatively good frequency response but are characterized by a poor stability (especially higher standard deviation) in the lift off values. Therefore, using thresholds on both the lift off values and the frequency response values provides more robust acceptance regions to decide on the quality of the AM part.

In order to acquire these lift off values and the frequency response values, the electromagnetic sensor ECS must be calibrated to provide accurate lift off values and frequency response values over a range of material and possibly geometrical variations that can be encountered during the manufacturing process of an AM part.

During the calibration procedure, both the in-phase and the out-of-phase electric signals, referred hereafter as EC measurements, are acquired by the electromagnetic sensor ECS at a predefined interrogating frequency, for example 200 kHz, for a multitude of different controlled lift off positions relative to a calibration sample of a known quality, for example of a bulk density of 99.9%. In addition, EC measurements are further acquired by the electromagnetic sensor ECS at each of these multiple lift off positions for different interrogating frequencies, for example ten different frequencies, typically in the range 180kHz-205kHz for the situation where a working frequency of 200kHz is used to monitor the fabrication.

More particularly, the calibration sample is for example a cuboid of the highest and known quality for a particular material, which will be used for manufacturing the AM part. The cuboid may preferably have dimensions in the x-y plane exceeding three times the dimensions of the electromagnetic sensor ECS in the x-y plane. The vertical z distances between the electromagnetic sensor ECS and a top surface of the calibration sample is varied to acquire multiple EC measurements for different lift off values. This is done by lowering the build plate BP such that the different lift off values are preferably within a range from 50um to 3mm. Performing these calibration measurements in the LPBF machine is advantageous because the machine offers simple ways to control lift off, i.e. the distance between the electromagnetic sensor ECS and the top surface of the calibration sample, by lowering the build plate BP.

The EC measurements of the calibration sample acquired by the electromagnetic sensor ECS with different frequencies for each lift off position, typically by steps of 0.1 to 1% within a range of 1% to 10% below the predetermined working interrogating frequency (e.g. 200kHz) produce the same effect (in an ideal RL electrical circuit) on the signal as that of varying the electrical conductivity of the sample. Using different frequencies below the predetermined interrogating frequency on a sample with the best achievable quality is therefore equivalent, as far as the ECS response is concerned, to a degradation of the electrical conductivity of this sample that would be caused by defects. Such measurements avoid the need to measure different calibration samples with different electrical conductivities, which would be tedious and unpractical.

For the small variations of quality (<1% of density relative to a calibration reference sample) that matter most and are the most difficult to measure (more severe degradations can be detected by the coloration of the samples, the shape and structure of the surfaces, or by the presence of fumes, respatter, etc..), the electrical conductivity varies linearly with the relative density. Therefore, the relative variation of the frequency coordinate is a good estimate of the variation of the relative density. For example, a sample measured with a frequency value of 99.9% of that of reference sample could have a porosity value 0.1% larger than the reference sample in this linear approximation.

As the response of an electromagnetic sensor is not linear with the lift off, it is advantageous to choose position steps corresponding to similar voltage variations.

EC measurements acquired on the calibration sample with a relative density of 99.9 % by the electromagnetic sensor ECS with an interrogating frequency of 200kHz would provide a specific signal signature corresponding to a relative density of 99.9%. Repeating the measurements at the same lift off position with an interrogating frequency of 198kHz would for example provide a specific signal signature corresponding to a relative density of approximately 99%.

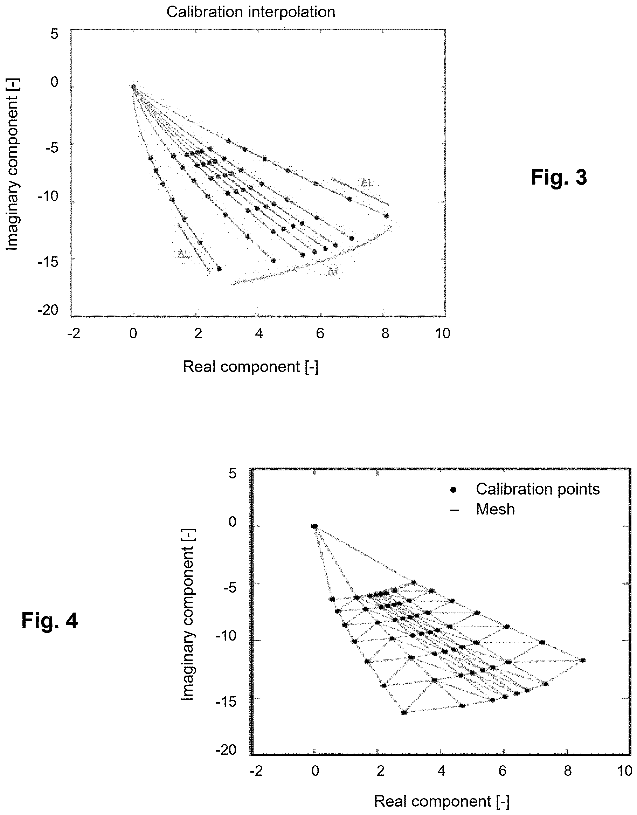

The result of the EC measurements acquired during the calibration procedure is a table with the values of the sensor response in phase and out of phase voltage as a function of the distance between the electromagnetic sensor ECS and the top of the calibration sample in the z direction (i.e. lift off coordinate) and for each lift off coordinate different frequency coordinates that correspond to different electrical conductivities. The EC measurements of the calibration procedure can be expressed in a graph as shown in Figure 3.

The measurement points can be first resampled independently along each dimension to create a regular 2D mesh of points as shown in Figure 4. The 2D regular resampled mesh can then be interpolated using a 2D interpolation tool of the vector values resulting in interpolation coefficients for a particular electromagnetic sensor ECS used to acquire the calibration measurements on a particular material. This procedure corresponds to a non-orthogonal transformation of the two-dimensional in-phase and out-of-phase voltage coordinates in the two-dimensional lift off and frequency coordinates. This transformation can then be used to calculate an accurate distance in the z direction and a frequency coordinate from an input vector, consisting of an in-phase and out-of-phase sensor measurement provided in Volts.

During the manufacturing process of the AM part of an unknown quality, the sequence of the recoater motion, the powder spreading, the laser illumination and the control of the downward motion of the build plate step by step is machine and process dependent which may vary. The recoater RC is moved over the build plate BP for spreading a powder layer PL for every layer to be manufactured. The electromagnetic sensor ECS is properly configured to measure the distance D1_{EMS} between a reference point in the Z direction depending on the position ECS on the recoater and the surface of the build plate BP for a first layer or the top surface of a previous consolidated layer CL for every new layer. The configuration is done so that the ECS sensor is not sensitive to the powder but only to the surface and subsurface of the consolidated sample by properly tuning the interrogating frequency, typically below 5MHz, preferably in the range 50KHz-500kHz. The distance D1_{EMS} correspond to a lift off value which is dependent of the consolidated layer thickness CLT.

More particularly, with reference to Figures 2a to 2f, the following sequence may occur:
1. The recoater RC is moved forwards over the build plate for spreading a new powder layer PL over the consolidated layer CL and for measuring with the electromagnetic sensor ECS the distance D1_{EMS} and optionally for measuring with the distance measurement sensor DMS the distance D2 (Figure 2a);
2. Once the recoater RC has completed the spread of the new powder layer, the latter is selectively illuminated for selectively consolidating a new layer (Figure 2b);
3. The build plate is then moved downward by a step (Figure 2c);
4. The reacoater RC is moved backwards over the selectively consolidated new layer to return to its initial position (Figures 2d and 2e);
5. The recoater RC is moved again forwards over the build plate for spreading a new powder layer PL over the previous consolidated layer CL and for measuring with the electromagnetic sensor ECS the distance D1_{EMS} and optionally for measuring with the distance measurement sensor DMS the distance D2 as shown in Figure 2f.

The powder layer thickness PLT is obtained by subtracting the distance D2 measured with the distance measurement sensor DMS from the distance D1_{EMS} measured with the electromagnetic sensor ECS. The acquisition of measurements by both sensors are timely synchronized to compensate the offset ΔX between the position of the sensors along the moving direction X of the recoater RC. These measurements are further corrected to compensate the offset ΔZ along the z-direction between these two sensors.

The powder layer thickness can also be measured during sequence 4 with the distance measurement sensor DMS only (i.e. without the electromagnetic sensor ECS) by measuring the ditches created in the powder bed by the laser illumination. In other words, the powder layer thickness PLT can be measured using the difference between two distances D2 and D1_{DMS} measured sequentially with the distance measurement sensor DMS, one at a location where powder has been illuminated and one at a location where no illumination took place as shown in Figures 2d and 2e.

The DMS used to measure the powder layer thickness can be an electromagnetic sensor tuned to have a sensitivity to the powder by increasing its interrogating frequency above 5MHz, preferably above 50MHz for non-magnetic powders. In one implementation, the same physical sensor is used as the ECS sensor when driven with an interrogating frequency lower than 5MHz and as a DMS sensor when the interrogating frequency is above 5MHz.

Downward steps of the build plate BP, which are typically in a range of 20um to 100um for LPBF, should correspond to the consolidated layer thickness in an ideal manufacturing process and is therefore abusively called the "layer thickness" or "nominal layer thickness". In such case, the distance D1_{EMS} acquired by the electromagnetic sensor EMS as the recoater RC is moved forwards over a consolidated layer CL as shown in Figure 2a is equal to the distance acquired by the electromagnetic sensor EMS as the recoater RC is moved again forwards over the build plate for spreading a new powder layer PL over the previous consolidated layer CL as shown in Figure 2f.

However, as explained above, significant deviations can occur during the process potentially yielding a discrepancy between the "nominal layer thickness" (build piston travel) and the "effective layer thickness" (actual layer thickness). It is therefore useful to use this build plate downward step value to calculate the threshold on the standard deviation of the lift off, which provides an estimate of the variation of the real thickness of the consolidated metal layers. Typically, a standard deviation of the lift off coordinate of less than 5 microns over 20 to 50 layers for a downward build plate motion of 60 microns per layer is necessary to obtain good samples. In general, a threshold of the lift off deviation of less than 10% of the build plate step is necessary (but not sufficient) to obtain good quality samples.

The electromagnetic sensor ECS is driven using a predefined interrogating frequency, for example 200 kHz, for sensing one or more sub-parts of a consolidated layer CL and storing an EC measurement em¹, em², em³...emⁿ for each one or more sub-parts for each consolidated layer CL. These measurements are then transformed into lift off values and frequency values respectively using lift off calibration values and frequency calibration values acquired during the calibration procedure as described above.

A first and a second statistical value are then calculated based on respectively the different lift off values and the different frequency values acquired during the build process of the AM part. The quality of the built AM metal part can be classified as acceptable or not acceptable by comparing the first statistical value with a first threshold and the second statistical value with a second threshold.

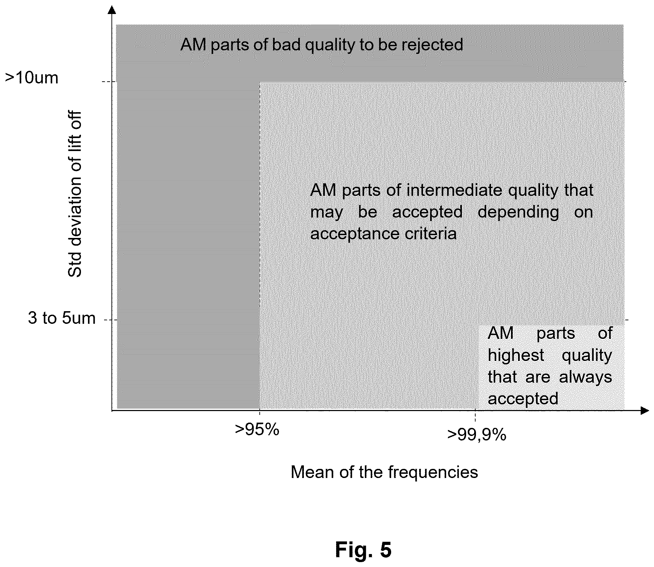

As shown in Figure 5, these threshold values may vary significantly depending on the field of application of the AM parts. Parts which are not subjected to high mechanical stress may for example have a degree of acceptable porosity and therefore the scan speed and the (nominal) layer thickness may be increased to shorten the manufacturing time. Conversely, parts subjected to high mechanical and cyclic stress such as aeroengine components, or certain medical devices require very high relative density, i.e., low porosity, to avoid pre-mature fatigue failure.

AM parts for which the signal signature of the mean frequency response values corresponds or is approaching the most the signature signal of the calibration sample having an electrical conductivity corresponding to 99.9% relative density and wherein the standard deviation of the lift off values is below a threshold range of 3 to 5um are the AM parts with the highest quality.

AM parts with a mean frequency response value between 95% and 99.9% or with a standard deviation of the lift off values is between 5um and 10um are the AM parts with intermediate quality that may be accepted. AM parts with a mean frequency value of less than 95% are usually of bad quality and are rejected.

EC measurements em¹, em², em³...emⁿ of both the lift off and frequency response for one or more subparts of each consolidated layer CL as well as the powder layer thickness PLT prior to consolidation enable fine monitoring of the quality of the AM part. Deviations of these quantities during the process are known to be correlated with defects in the AM parts. They can therefore be used to feed early warning systems or to classify the AM parts as acceptable, non-acceptable or conditionally acceptable depending on their field of application.

Each time the recoater RC passes over an AM part during manufacturing, the lift off is recorded and, then, the variation of the lift off (for instance calculated using the standard deviation over 5 to 200 layers) is compared to an operational parameter which is the downward build plate step, which, in most cases, is constant for one fabrication and typically in the range 20 to 100um. A single value, set by the operator between 5 and 40%, typically between 5 and 20% of this downward build plate step (nominal layer thickness), is defined as the threshold of the standard deviation of the lift off to be used to accept samples. This method results from the fact that a small variation of the deposited metal layer thickness, i.e. a stable process, is necessary to manufacture good samples. Combined with the measurement of the quality of the sample given by the other component of the eddy current signal (the frequency coordinate), the acceptance of the sample can be decided using 2 threshold values.

During the fabrication of the AM part, EC measurements em 1, em², em³...emⁿ are recorded and used for the quality analysis and acceptance of the part. In one embodiment, a single measurement performed always at an equivalent x-y location (the x direction being the direction of the recoater motion while the y direction is perpendicular to it and in the horizontal plane) of the AM part is used. In another embodiment, a set of measurements collected on a sub-part of the AM part are averaged to define the quality of the part at a particular layer. The sub-part is preferably chosen so that the edge of the part does not affect the result. If this is not possible, the edge, affecting the amplitude and variation of the signal as a function of position, can be taken into account using FEM calculations or data collected on the edge of a reference sample.

In an embodiment, the EC measurements are first tagged as a function of the scan vector orientation so that layers with the same type of laser trajectory can be grouped and classified as a function of the statistical values of the lift off and of the frequencies. This reduces the variation of the measurements caused by slightly different surface properties (for instance the roughness) that are likely not linked to a quality issue.

The single measurement and the measurements of the sub-parts are performed at locations that are equivalent along the z direction. For example, the subparts will be chosen in such a way that they are located at the same distance to the edges for each z position, which means that the x location of the subparts may be different for different layer numbers if the part is not a cuboid.

The method can be generalized for more dimensions than two, for instance if multiple interrogating frequencies are used which allows to probe additional physical properties of the AM part such as the magnetic permeability.

The lift off values (for instance in micrometer or millimeter units) can be displayed after each recoater passage on the machine computer or on any process monitoring display. Displaying lift off values after each recoater passage is useful to estimate the lift off variation across the build plate, to detect collisions between the recoater and the parts, to detect cold cracking and part or support warping that result in a variation of the position of the parts.

The measured values, for instance the lift off values (i.e. raw values, average values or standard deviation) can be transmitted to a Manufacturing Execution System (MES), aggregating all high-level information about the machine and the fabrication such as the temperature or the oxygen content or the timing of the manufacturing steps provided by other sensors.

The lift off is a critical input variable to assess the stability of the process and can therefore be used to generate compliant documentation required in the operation or performance qualification.

The lift off values can feed a closed feedback loop system for controlling the powder layer thickness (PLT) by adjusting the build plate steps and/or for controlling the laser power based on these lift off values.

The lift off values of each layer can be displayed together with the frequency values of each layer provided by the interpolator for the same sample in a 2-dimensional plot with lift off and frequency coordinates to compare and classify samples.

The standard deviation of the lift off values for the same sample for a group of 5 to 50 layers can be displayed as a function of the frequency values of each layer for the same sample to compare and classify samples.

The distance D1_{EMS} measured with the electromagnetic sensor ECS, and the distance D2 measured with the distance measurement sensor DMS can be used at the beginning of a fabrication to measure the powder layer thickness PLT. The latter can be compared to the maximum acceptable powder layer thickness that allows a good adhesion of the sample to the build plate.

The eddy current measurement, providing the distance D1_{EMS}, and the laser distance sensor providing the distance D2 can be used before the fabrication to assess the alignment of the machine components and of the build plate.

Thresholds can be set using independent destructive or nondestructive tests performed with, for instance, X-rays tomography to define acceptable versus non-acceptable samples in the above 2-dimensional plots based on the defects measured on these samples and acceptance criteria. With this method, typical thresholds with values between 5 and 15 um on the standard deviation of the lift off over the sample are set to reject the samples that have a non-acceptable quality i.e. too many defects.

Thresholds can be set to define acceptable versus non-acceptable samples in the above 2-dimensional plots, for instance a threshold on the frequency coordinate of 0.5% of the interrogating value can be used to separate the good samples that have the higher frequency from the bad ones that have a lower value.

Manufacturing samples with steps of controlled degraded quality, for instance samples with 99.9-99.5-99.0-98.0-96.0-94.0% porosity, measuring them with the above method, and displaying them in the above 2-dimensional plot, is useful to correlate a quality value such as the porosity with the quality information provided by the method. An interpolation between the porosity values of the samples and the lift off and frequency coordinates, enables the determination of the porosity of an unknown sample subsequently produced in a machine instrumented with the calibrated sensors using the same feedstock material and process settings.

An important aspect of the method stems from the fact that the thresholds can also be defined without the need of any destructive or non-destructive tests and complex sets of calibration samples defined in a design of experiment. The lift off-frequency calibration is performed on one single sample of the same material as that to be manufactured, with a known quality. The acceptance can then be defined by using 2 simple thresholds, one for highest value of the standard deviation of the lift off and one for the lowest value of the frequency coordinate. For instance, a standard deviation of the liftoff calculated over 50 layers of less than 3um and a frequency coordinate larger than 99.9% will give excellent samples that can be used for aerospace applications.

Also, the absolute value of the lift off can be related to the quality of the sample as good quality samples have the best conversion ratio of the powder layer to consolidated metal layer. A conversion ratio of less than 2 typically provides the best samples, a lack or an excess of energy input results both in less efficient conversion and therefore larger lift off distances. The conversion ratio can also be used to estimate the material loss during processing (due to evaporation, denudation, spatter, etc.) as one parameter to assess the sustainability of the process parameters.

In addition, the conversion ratio and powder layer thickness also depend on the feedstock properties and the recoating parameters (e.g. recoating speed, recoating technology etc.). Therefore, these values can also be used to assess the processability of feedstock material, and to determine suitable recoating parameters during material qualification and process parameter development.

A coarse-to-fine method to decide quickly whether a sample is acceptable is disclosed. The values calculated from the lift off data and from the frequency coordinate data are first compared to the rejection thresholds (given for instance in the standard deviation of the lift off, for instance a value of 10um or more will always give bad samples) and to the best samples region (i.e. for instance samples with 99.9% density corresponding to a threshold in the standard deviation of the lift off of 4um and a threshold in the frequency coordinate of 99.9% of the frequency coordinate). For samples in between these regions that may be conditionally accepted, interpolation algorithms are used to determine the quality, for instance the porosity between 95% and 99.9% with typically 0.1% accuracy. At least 2 different interpolation algorithms can be made, one for the samples that are degraded because of lack of fusion (low VED) or one for the samples degraded by the keyhole effect (large VED).

## Claims

1. A method for manufacturing, monitoring and classifying an AM metal part, wherein said AM part is manufactured by a powder-bed additive manufacturing machine comprising a build plate (BP), a recoater (RC) and at least one electromagnetic sensor (ECS) mounted on said recoater, the method comprising the steps of:
i) spreading a powder layer (PL) over the build plate (BP) with the recoater and manufacturing a layer of the AM part by selectively illuminating the powder layer to obtain a consolidated layer (CL),
ii) driving the electromagnetic sensor (ECS) using at least one predefined interrogating frequency, sensing one or more sub-parts of said consolidated layer (CL) and storing a measurement of both the in-phase and the out-of-phase electric signals for each of said one or more sub-parts;
iii) lowering the build plate and repeating steps i) and ii) for building and sensing one or more additional consolidated layers (CL);
iv) transforming measurements acquired under step ii) into lift off values and frequency values respectively using lift off calibration values and frequency calibration values acquired during a calibration procedure;
v) calculating a first statistical value based on said lift off values and a second statistical value based on said frequency values, and
vi) classifying the quality of the built AM part as acceptable or not acceptable by comparing said first statistical value with a first threshold and said second statistical value with a second threshold.

2. The method according to claim 1, wherein the measurements acquired under step ii) are transformed under step iv) into said lift off values and frequency values using interpolation coefficients of said at least one electromagnetic sensor (ECS) obtained by the calibration procedure.

3. The method according to the preceding claim, said interpolation coefficients are obtained by executing a 2D interpolation algorithm on both the in-phase and of out-of-phase electric signals measured on a calibration sample for two or more selected frequencies, preferably at least five selected frequencies, for each of at least two lift off positions, preferably at least five lift off positions, wherein said calibration sample is of a predefined quality, for example of a known porosity, and is made of the same material as the material of the AM part to be manufactured.

4. The method according to the preceding claim, wherein said predefined interrogating frequency is between 1kHz and 10MHz and said two or more selected frequencies are set within the range from 80% to 120%, preferably from 90% to 110% of the predefined interrogating frequency.

5. The method according to any preceding claim, wherein a distance measurement sensor (DMS) is mounted on the recoater (RC) to measure a powder distance (D2) between the top surface of the powder layer (PL) prior to consolidation and the known position of said distance measurement sensor, wherein the thickness of the powder layer (PLT) is calculated based on the difference between said powder distance (D2) and either
the lift off value (D1_{EMS}) obtained by the electromagnetic sensor (ECS) for at least one sub-part of a consolidated layer (CL), or
the distance (D1_{DMS}) obtained by the measurement sensor (DMS) at a location where the powder has been illuminated.

6. The method of the preceding claim, further comprising the steps of:
comparing the ratio between the consolidated layer thickness (CLT) and the powder layer thickness (PLT) with a threshold range, and
classifying the quality of the built AM part as not acceptable if said ratio is outside said threshold range.

7. The method of claim 5 or 6, wherein the quality of the built AM part is classified as not acceptable, and the manufacturing process is stopped if the powder layer thickness (PLT) is below a lower powder thickness threshold or above an upper powder thickness threshold.

8. The method according to any preceding claim, wherein said first statistical value is the standard deviation of the lift off values acquired under step iv) for at least one sub-part of each of a plurality of consolidated layers (CL), preferably at least five consolidated layers, and wherein said first threshold is a standard deviation value above which the quality of the AM part is classified as not acceptable.

9. The method according to the preceding claim, wherein the standard deviation value is set within a range extending from 2um to 10um.

10. The method according to any of claims 1 to 7, wherein said first statistical lift off value is the standard deviation of the lift off values acquired under step iv) for at least one sub-part of each of a plurality of consolidated layers (CL), preferably at least three consolidated layers, and wherein said first threshold is a percentage of the value of the downward steps of the build plate (BP) during manufacturing above which the quality of AM part is classified as not acceptable, the percentage being set for example within a range extending from 10% to 20%.

11. The method according to any preceding claim, wherein said second statistical value is the standard deviation of the frequency values acquired under step iv) for at least one sub-part of each of a plurality of consolidated layers (CL), preferably at least five layers, wherein said second threshold is a standard deviation value above which the quality of the AM part is classified as not acceptable.

12. The method according to any preceding claim, wherein said second statistical value is the mean value of frequency values acquired under step iv) for at least one sub-part of each of a plurality of consolidated layers (CL), and wherein the frequency threshold to classify the AM part as acceptable is a percentage range of the calibration frequency value measured on a calibration sample during the calibration procedure, for example between 90% and 99.9% of said calibration frequency value.

13. The method according to any preceding claim, wherein said second statistical value is correlated to a given density, the AM part above said given density being classified as an acceptable part.

14. The method according to any preceding claim, wherein the lift off values acquired under step iv) are fed to a closed feedback loop system for controlling the powder layer thickness (PLT) according to said lift off values by adjusting the build plate steps and/or for controlling the laser power.
